Europäisches Patentamt

European Patent Office

Office européen des brevets

(19)

(11) Numéro de publication : **0 161 964**
**B1**

(12) **FASCICULE DE BREVET EUROPÉEN**

(45) Date de publication du fascicule du brevet :
06.07.88

(51) Int. Cl.⁴ : **G 06 F 15/72**

(21) Numéro de dépôt : **85400748.1**

(22) Date de dépôt : **16.04.85**

(54) **Procédé pour la fabrication d'un moule à partir des formes d'une pièce que l'on désire obtenir par moulage.**

(30) Priorité : 25.04.84 FR 8406471

(43) Date de publication de la demande :
21.11.85 Bulletin 85/47

(45) Mention de la délivrance du brevet :
06.07.88 Bulletin 88/27

(84) Etats contractants désignés :
DE GB IT

(56) Documents cités :
COMPUTER GRAPHICS AND IMAGE PROCESSING,
vol. 18, no. 2, février 1982, pages 109-144, Academic
Press, Inc., New York, US; S.D. ROTH: "Ray casting
for modeling solids"
MACHINE DESIGN, vol. 55, no. 9, avril 1983, pages 47-
52, Cleveland, Ohio, US; J.K. KROUSE: "Off-the-shelf
software for mechanical design"
PROCEEDINGS OF THE 18TH INTERNATIONAL
TECHNICAL CONFERENCE NUMERICAL CONTROL
SOCIETY, Dallas, 17-20 mai 1981, pages 215-229,
NCSCADCAM, Glenview, Illinois, US; R.H. JOHNSON
et al.: "Application of a computer aided engineering
system to manufacturing"

(73) Titulaire : LA TELEMECANIQUE ELECTRIQUE
33 bis, avenue du Maréchal Joffre
F-92000 Nanterre (FR)

(72) Inventeur : Lalloz, Paul
125, rue Alfred de Musset
F-95370 Montigny les Cormeilles (FR)
Inventeur : Vo, Hung Anh
23, Place Antoine de Saint Exupéry
F-94310 Orly (FR)

(74) Mandataire : Marquer, Francis et al
CABINET MOUTARD 35, avenue Victor Hugo Résidence Champfleury
F-78180 Voisins-le-Bretonneux (FR)

EP 0 161 964 B1

## Description

La présente invention concerne un procédé pour la fabrication d'un moule à partir des formes d'une pièce que l'on désire obtenir par moulage.

Elle a plus particulièrement pour objet la fabrication d'un moule formé d'au moins deux parties mobiles en translation l'une par rapport à l'autre selon un axe déterminé, et portant chacune une partie de l'empreinte de la pièce à mouler.

Ainsi, en position fermée du moule, ces deux parties sont assemblées jointivement et délimitent par leurs empreintes, un volume fermé sensiblement aux dimensions de la pièce et dans lequel la matière de moulage peut être injectée. Une fois la prise de la matière terminée, le démoulage s'obtient ensuite en écartant les deux parties du moule par un déplacement au cours duquel la pièce qui vient d'être moulée se trouve extraite d'au moins l'une des parties du moule, la pièce pouvant ensuite être dégagée de l'autre partie, par exemple au moyen d'un éjecteur.

Il est clair que dans le cas d'une pièce présentant une forme prismatique, ce démoulage peut s'effectuer sans difficultés. Par contre, dans le cas de pièces de formes plus complexes, il est nécessaire de concevoir des moules dans lesquels les plans de joint des deux parties de moule sont particulièrement étudiés pour permettre de démouler sans avoir à utiliser (autant que possible), des tiroirs ou autres artifices qui augmentent considérablement la complexité du moule et, en conséquence, son prix de revient.

Bien entendu, à ce problème de détermination des plans de joint s'ajoutent de nombreux autres problèmes qu'il convient de résoudre tels que, par exemple, le problème de retrait, les problèmes de dépouille, de contre-dépouille, etc.

Dans l'état actuel de la technique, en vue de la détermination de la structure et des formes d'un moule, le projeteur-mouliste utilise au départ les dessins de la pièce en deux dimensions. Il reproduit ces dessins à de nouvelles cotes tenant compte des retraits de la pièce lors du moulage.

Après avoir étudié les formes de la pièce, il effectue ensuite une recherche approchée des plans de joint des deux parties du moule.

Il s'agit là d'une opération particulièrement délicate faisant appel à toute l'expérience et toutes les connaissances du projeteur-mouliste pour la recherche de la meilleure solution possible compte tenu du cahier des charges.

Le projeteur doit ensuite définir la pièce en position dans l'espace par rapport aux empreintes, puis représenter la pièce en perspective pour obtenir une visualisation de celle-ci en trois dimensions.

Il doit en outre représenter le négatif des pièces en trois dimensions (ou simplement effectuer des calques des parties pleines ou creuses de la pièce). Cette représentation doit notamment comprendre des vues éclatées des parties fixes et mobiles du moule et la définition de toutes les formes des empreintes.

Dans une phase suivante, le projeteur-mouliste effectue le découpage des morceaux d'empreinte puis procède à la finition de l'étude et éventuellement à son optimalisation.

Il s'avère donc que l'ensemble des travaux à effectuer en vue de la définition d'un moule par cette méthode sont relativement longs et coûteux. Cette méthode exige en outre l'intervention de projeteurs-moulistes particulièrement compétents et expérimentés, capables de déterminer les meilleurs plans de joint possibles à partir de dessins représentés en deux dimensions.

Selon Machine Design, volume 55, numéro 9, avril 1983, pages 47-52, Cleveland, Ohio, US ; J.K. KROUSE : « Off-the-shelf software for mechanical design », on a déjà proposé un procédé de modélisation des parties fixe et mobile d'un moule utilisant un logiciel de dessin assisté par ordinateur.

L'invention propose un procédé permettant de simplifier considérablement la tâche du projeteur-mouliste en le déchargeant d'opérations fastidieuses et en facilitant la recherche de la solution optimale, de manière à obtenir ainsi un gain de temps appréciable et une diminution notable du prix de revient du moule dont une part appréciable (environ 30 %) est imputée à l'étude et à la réalisation du moule.

Pour parvenir à ce résultat, l'invention utilise nécessairement un processeur doté d'un logiciel de conception assistée par ordinateur permettant, à partir d'un fichier comprenant l'ensemble des caractéristiques de forme de la pièce, d'effectuer, à la demande, des représentations graphiques de la pièce, en deux ou trois dimensions.

On sait qu'à l'heure actuelle, parmi les logiciels de conception assistée par ordinateur permettant la modélisation tridimensionnelle d'un objet, on peut distinguer trois types principaux de logiciels, à savoir :

les logiciels permettant de réaliser une modélisation selon le modèle « fil de fer », en ne conservant que les coordonnées des sommets de l'objet modélisé ainsi que les arêtes joignant ces sommets ;

les logiciels permettant d'effectuer une modélisation de type surfacique, par une définition des surfaces de l'objet modélisé ;

les logiciels permettant de réaliser des modèles « solides » ou volumiques en intégrant le concept de matière.

Le logiciel convenant pour la mise en œuvre du procédé selon l'invention doit plus précisément permettre d'effectuer une représentation combinée des trois types de modélisation précédemment mentionnés.

Il doit en particulier permettre de distinguer la matière de l'absence de matière et une pièce de son empreinte. Il doit permettre l'utilisation, sans restriction, des opérateurs booléens (théorie des ensembles) et de leurs applications notamment pour réaliser des fonctions telles que des enlèvements de matière, des coupes et des sections ou encore la détection de parties communes. Il doit également permettre de mémoriser toutes les étapes intermédiaires effectuées au cours d'un processus de modélisation, et de reporter une modification effectuée lors d'une étape intermédiaire sur le modèle obtenu lors d'une étape suivante. Il doit en outre permettre des changements automatiques de plans, d'unités et de standard.

Il convient de noter que le processeur utilisé et le logiciel de conception assistée par ordinateur sont bien connus et ne font pas l'objet de la présente invention. Celle-ci consiste en effet en l'utilisation de ce logiciel et en son adaptation dans le cadre bien particulier d'un procédé pour la réalisation d'un moule à partir d'une pièce que l'on désire réaliser par moulage.

Ainsi, d'une façon plus précise, le procédé selon l'invention comprend les étapes suivantes :

la modélisation et la représentation graphique de la pièce en trois dimensions,

la détermination, à partir des formes de la pièce et/ou de son modèle, d'un plan de référence, appelé ci-après plan de joint zéro, qui constitue le plan de séparation principal des deux parties du moule,

la modélisation et la représentation graphique éventuelle du négatif de la pièce, en trois dimensions, à l'intérieur d'un cubage pouvant présenter les dimensions du bloc de matière à partir duquel on réalise le moule (bloc moule), et est caractérisé en ce qu'il comprend au moins les étapes supplémentaires suivantes :

l'insertion du modèle de la pièce dans le modèle de son négatif,

la recherche des zones indémoulables par une simulation d'un déplacement relatif entre le modèle de la pièce et les deux parties du modèle de son négatif délimitées par le plan de référence, selon un axe perpendiculaire audit plan, et par une détermination des portées de contact entre la pièce et les empreintes,

la visualisation des portées de contact par une représentation graphique dans au moins un plan déterminé,

la représentation graphique systématique, dans des plans perpendiculaires au plan de référence des sections du modèle du négatif passant par les zones indémoulables et la détermination des plans de joint décalés dans des tranches successives du modèle du négatif incluant lesdites zones, et de largeur correspondant auxdites zones,

la modélisation des empreintes mobiles et fixes en fonction des plans de joint précédemment déterminés, et la fabrication d'un moule dont les parties fixes et mobiles comprennent des plans de joint et des empreintes conformes aux modèles précédemment déterminés.

Les étapes facultatives suivantes peuvent être prévues :

la modélisation du volume pièce issu de l'empreinte fixe,

la modélisation du volume pièce issu de l'empreinte mobile,

la formation de dépouilles sur lesdits volumes à partir des plans de joint, et

la fusion des deux volumes pièces dépouillés afin de reprendre l'étude complète sur pièce aux cotes réelles.

Un mode d'exécution de l'invention sera décrit ci-après, à titre d'exemple non limitatif, avec référence aux dessins annexés dans lesquels :

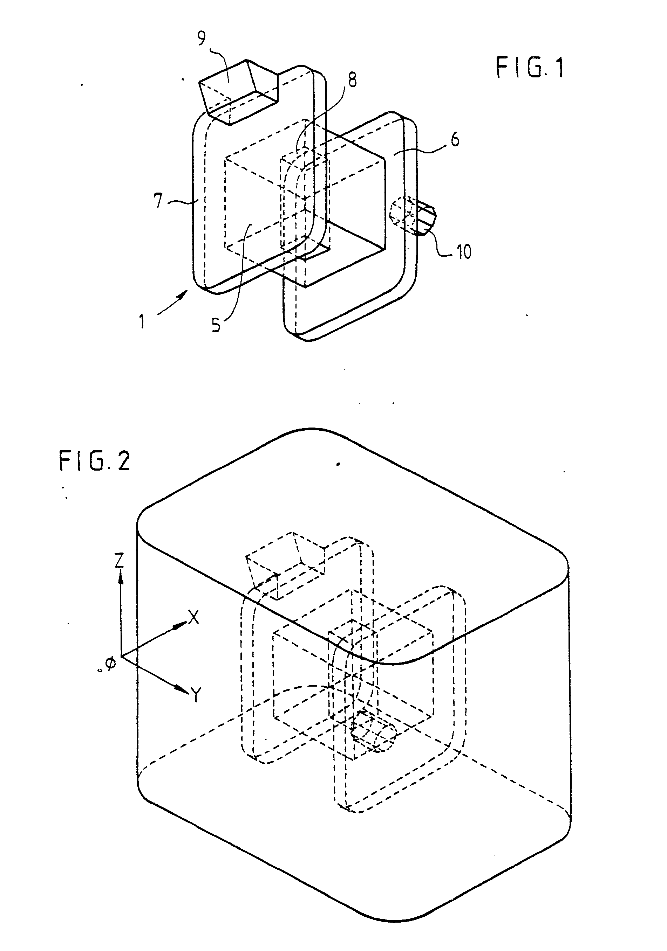

Les figures 1 à 10 sont des représentations schématiques illustrant différentes étapes du procédé selon l'invention, à savoir :

la visualisation du modèle de la pièce en trois dimension (figure 1),

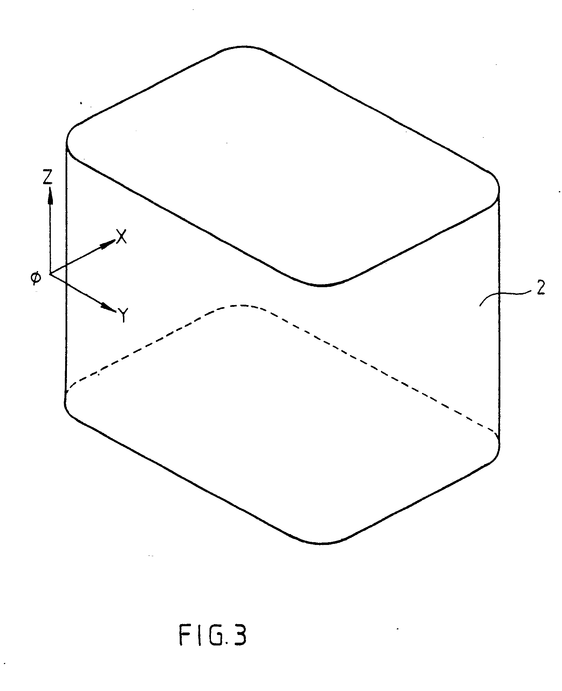

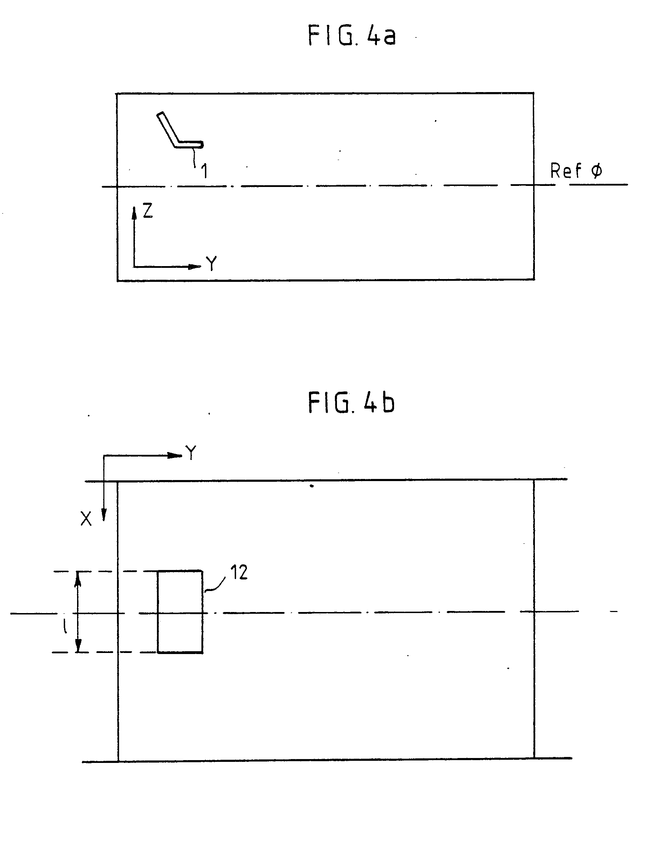

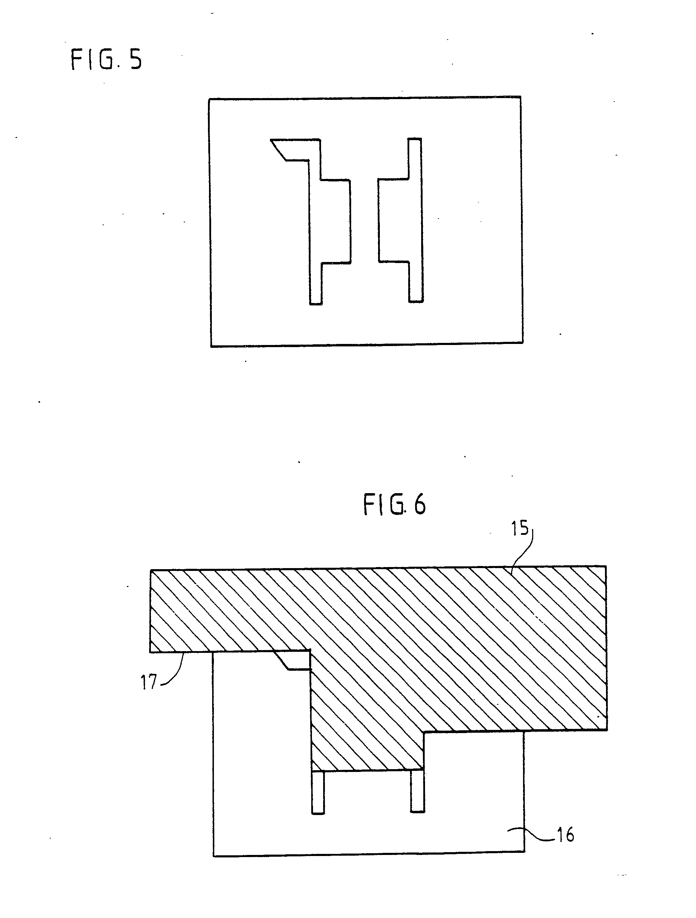

la visualisation du modèle du négatif de la pièce en trois dimensions (figure 2),

la visualisation du modèle d'un boîtier obtenu par cubage aux cotes standard de l'empreinte (figure 3),

la visualisation, en deux dimensions, des zones indémoulables du modèle de la pièce par rapport au plan de joint de référence (figures 4a et 4b),

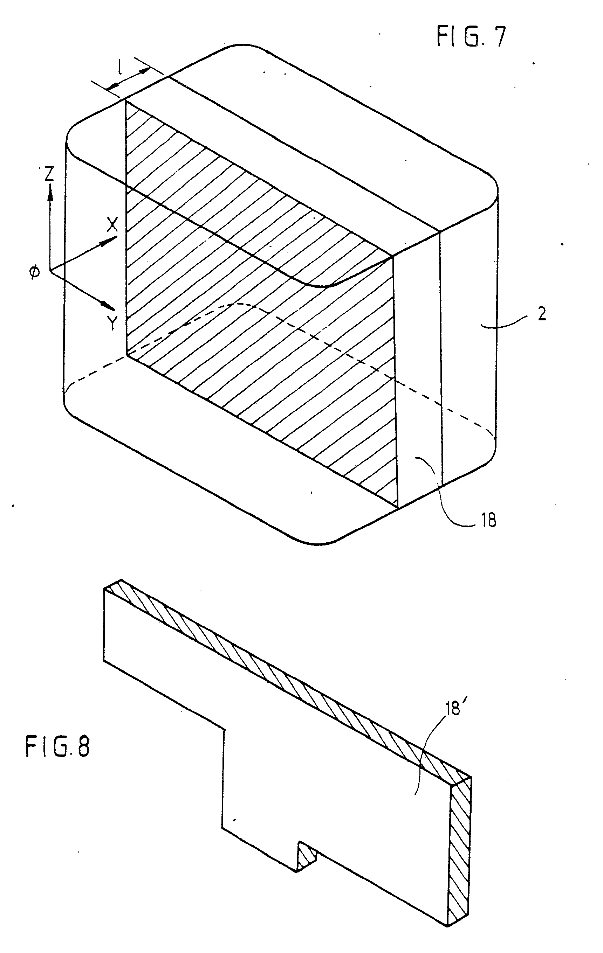

la visualisation, dans deux dimensions, d'une section du modèle de l'empreinte dans une zone indémoulable (figure 5), le projecteur décidant du choix de ces sections,

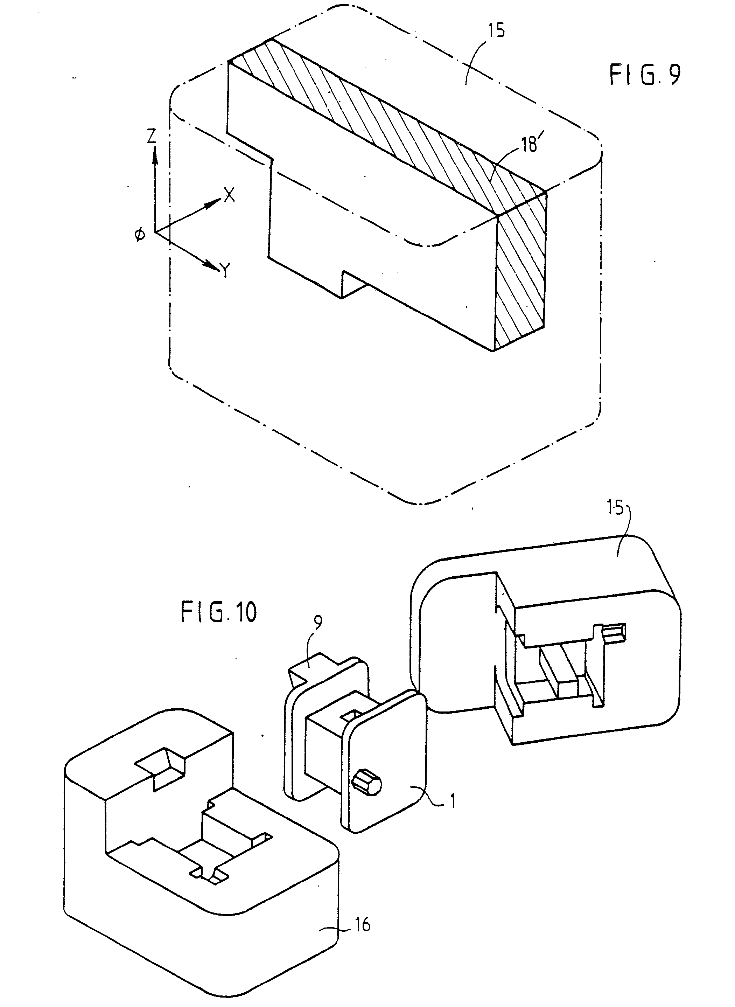

une visualisation de même type que celle de la figure 5, mais dans laquelle les plans de joint décalés ont été déterminés (figure 6), par le projeteur en repérant des points existants de la section (figure 5) d'une part, ou en en créant à partir d'autres sur cette même section d'autre part,

une visualisation, en trois dimensions, illustrant la réalisation du modèle d'une tranche du boîtier à la largeur de la zone indémoulable précédemment déterminée (figure 7),

une visualisation, en trois dimensions, de la partie fixe du modèle de la tranche représentée figure 7 (figure 8),

une visualisation, en trois dimensions, de la partie fixe du modèle du boîtier sans empreinte avec ses plans de joint décalés (figure 9),

une visualisation, en trois dimensions, du modèle de la pièce et des deux parties du modèle du boîtier avec leurs empreintes respectives (figure 10),

la modélisation du volume de la pièce issu de l'empreinte fixe,

la modélisation du volume de la pièce issu de l'empreinte mobile, et

la transformation des faces des empreintes par des faces dépouillées, à partir des plans de joint.

Comme précédemment mentionné, la première étape du procédé selon l'invention consiste en la modélisation sur ordinateur de la pièce que l'on désire réaliser par moulage. Cette modélisation s'effectue en trois dimensions conformément à la procédure du logiciel de conception assistée par ordinateur utilisé. Cette modélisation de la pièce implique, par conséquent, la constitution d'un fichier contenant tous les paramètres de la pièce exploitables par le logiciel ainsi que l'entrée en mémoire de données provenant du cahier des charges de conception de la pièce, pouvant notamment concerner la matière de moulage, la quantité à produire, des informations sur les tolérances, sur les faces d'aspect, les traces d'injection, les traces d'éjection sur les dépouilles et les contre-dépouilles, les bavures et les contraintes de moulage.

Une fois la modélisation effectuée, l'opérateur peut donc visualiser le modèle de la pièce 1 en trois dimensions, comme représenté sur la figure 1. En fonction des formes de cette pièce, il doit alors positionner la pièce dans l'espace par rapport à un système de coordonnées de référence X, Y, Z = Ø, appelé référentiel Ø du système, dans lequel le plan X Ø Y simule, au moins provisoirement, le plan de joint principal des deux parties du moule.

L'étape suivante comprend une nouvelle modélisation, en trois dimensions, effectuée à partir de la première, en tenant compte des retraits de la matière au cours du moulage. Cette opération peut être réalisée à l'aide d'un programme spécifiquement conçu et établi d'après des résultats d'études rhéologiques et de la position du ou des points d'injection.

On procède ensuite au cubage du modèle de la pièce 1, c'est-à-dire à son intégration dans un bloc moule ou boîte 2, éventuellement parallélépipédique comme représenté sur la figure 2 puis à la modélisation du négatif de la pièce 1, par enlèvement dans la boîte 2 du volume de la pièce (figure 3). Cette opération peut être entièrement réalisée par l'ordinateur.

Bien entendu, chacune de ces étapes peut être visualisée sur un écran cathodique ou bien sur une table traçante.

L'étape suivante du procédé consiste en la recherche des zones indémoulables par rapport au plan de joint principal. Cette recherche doit s'effectuer successivement sur la partie fixe et sur la partie mobile du moule et peut être également exécutée par l'ordinateur.

Pour obtenir les zones indémoulables de la partie fixe du moule que l'on supposera à la partie supérieure, on coupe d'abord la boîte 2 par le plan de joint principal et l'on ne conserve que la demi-boîte supérieure qui comprend le 1/2 négatif supérieur et l'ordinateur simule une translation prédéterminée de la pièce (modèle) vers le bas. Il détermine ensuite les zones d'intersection entre le demi-négatif supérieur et la pièce translatée, et visualise les zones indémoulables ainsi déterminées dans l'espace (figures 4a et 4b). Le déplacement simulé pourrait également, dans certains cas, être constitué par une affinité.

On procède d'une façon analogue pour obtenir les zones indémoulables dans la partie mobile du moule, supposée à la partie inférieure de la boîte 2 en simulant une translation prédéterminée de la pièce 1 vers le haut et en ne conservant que la demi-boîte inférieure. Les zones indémoulables qui correspondent alors aux zones d'intersection entre les 1/2 négatif inférieur et la pièce peuvent être visualisées dans l'espace.

Il convient de noter, dans l'exemple illustré sur les figures 1 à 10, que la pièce à mouler consiste en une carcasse de bobine comprenant un corps central parallélépipédique 5 dont deux faces latérales opposées sont munies de deux joues rectangulaires 6, 7 parallèles au plan de référence Z Ø X. Le corps central 5 comprend un évidement central transversal 8 parallèle à l'axe Ø Z. La joue 7 est munie à sa périphérie d'une protubérance trapézoïdale 9 qui s'étend vers l'extérieur de la bobine selon l'axe Ø Y, tandis que la joue 6 comprend un téton cylindrique 10 qui s'étend également vers l'extérieur de la bobine selon l'axe Ø Y.

Dans ce cas, le plan de joint de référence Ø (ref Ø) choisi est un plan X Ø Y passant par l'axe du téton 10, de sorte que la zone indémoulable 12 visualisée en vue de face (figure 4a) et en vue en plan (figure 4b) dans la partie fixe correspond à la protubérance 9.

Une fois la zone indémoulable 12 localisée, le projecteur-mouliste doit déterminer les plans de joint décalés pour définir ensuite les formes des parties fixes et mobiles du boîtier 2 aptes à assurer un démoulage correct de la pièce. Il s'agit là d'une opération particulièrement délicate qui fait appel à tout le savoir faire de l'opérateur.

D'une façon générale, cette détermination est obtenue par la séquence d'opérations suivantes :

la visualisation systématique des sections donc (en deux dimensions) des modèles des empreintes mobiles et fixes passant au travers des zones indémoulables (figure 5), le choix de ces sections étant déterminé par le projeteur mouliste,

la détermination sur lesdites sections des futurs plans de joint décalés (par récupération de point sur l'écran), (figure 6), cette opération étant également effectuée par le projeteur,

la création d'un volume aux cotes standard des modèles des empreintes fixes et mobiles réunies (ou le rappel du boîtier 2 précédemment défini),

la découpe (par le projeteur), pour chacune des zones indémoulables, d'une tranche du modèle du boîtier à la largeur de cette zone (figure 7),

pour chacune de ces tranches de boîtier, l'obtention du modèle de la partie fixe de cette tranche, délimitée par les plans de joint précédemment déterminés (figure 8),

la fusion des parties fixes desdites tranches, de manière à obtenir un modèle de la partie fixe du boîtier sans empreinte (figure 9),

la formation de l'empreinte dans le modèle de la partie fixe du boîtier en positionnant le modèle de la pièce au référentiel Ø et en procédant ensuite à l'enlèvement du modèle de la pièce,

la formation de la partie mobile du boîtier sans empreinte par enlèvement dans le modèle du boîtier complet de la partie fixe telle que précédemment définie,

la formation de l'empreinte dans le modèle de la partie mobile du boîtier par enlèvement du modèle de la pièce dans ladite partie mobile, d'une façon analogue à celle précédemment indiquée pour le modèle de la partie fixe.

Il convient de préciser que dans l'exemple représenté sur les dessins, la figure 5 est une section selon A/A de la figure 4, cette section passant par la zone indémoulable 12. La figure 6 est une vue analogue à la figure 5 mais dans laquelle on distingue les plans de coupe entre la partie fixe 15 et la partie mobile 16 du moule. Ces plans de coupe comprennent notamment un plan 17 passant sur la face supérieure de la protubérance 9, de sorte qu'il devient possible de démouler celle-ci, lors de l'éjection de la pièce 1 hors de la partie mobile 16. La figure 7 représente le boîtier 2 dans lequel on a réalisé une tranche 18 incluant la zone indémoulable 12. La figure 8 est une vue en perspective de la partie fixe 18' de la tranche 18 de la figure 7. La figure 9 illustre le mode de réalisation de la modélisation de la partie fixe 15 du boîtier 2 par juxtaposition des tranches telles que celle représentée figure 8 et par fusion des plans de jonction. La figure 10 est une visualisation, en perspective éclatée, les deux parties fixe et mobile 15, 16 du modèle du boîtier 2 et du modèle de la pièce 1.

Une fois qu'il a obtenu le modèle des parties fixes et mobiles du boîtier, le projeteur-mouliste peut ensuite passer à l'étude et à la formation des dépouilles en fonction des plans de joint des deux parties du boîtier, par un repérage systématique des faces du modèle de la pièce devant présenter des dépouilles, la réalisation de ces dépouilles sur les empreintes étant ensuite effectuée grâce à un logiciel spécifiquement conçu à cet effet. Il peut ensuite procéder à l'étude et à la modélisation définitive des empreintes par enlèvement de la pièce représentée aux cotes réelles.

La dernière étape du procédé consiste en la fabrication d'un moule conforme au modèle précédemment établi et mémorisé par l'ordinateur. Cette fabrication peut être effectuée d'une façon classique d'après les schémas visualisés par l'ordinateur en deux ou trois dimensions, ou même d'une façon automatique au moyen d'une machine-outil à commande numérique pilotée par un processeur utilisant un logiciel de fabrication assistée par ordinateur compatible avec le logiciel de conception assistée précédemment utilisé.

**Revendications**

1. Procédé pour la fabrication d'un moule à partir des formes d'une pièce (1) que l'on désire obtenir par moulage, par modélisation des parties mobile et fixe (15, 16) du moule sur un ordinateur utilisant un logiciel de conception assistée par ordinateur permettant une visualisation des pièces en deux et trois dimensions, comprenant les étapes suivantes :
— la modélisation et la représentation graphique de la pièce (1) en trois dimensions,
— la détermination, à partir des formes de la pièce et/ou de son modèle, d'un plan de joint zéro qui constitue le plan de séparation principal des deux parties du moule,
— la modélisation et la représentation graphique éventuellement du négatif de la pièce (1) en trois dimensions, à l'intérieur d'un cubage pouvant présenter les dimensions du bloc de matière à partir duquel le moule est réalisé, caractérisé en ce qu'il comprend au moins les étapes supplémentaires suivantes :
— l'insertion du modèle de la pièce (1) dans le modèle de son négatif,
— la recherche des zones indémoulables (12) par simulation d'un déplacement relatif entre le modèle de la pièce (1) et les deux parties du modèle de son négatif délimitées par le plan de référence (X ∅ Y), selon un axe perpendiculaire audit plan, et par une détermination des portées de contact entre la pièce (1) et lesdites parties du modèle du négatif,
— la visualisation des portées de contact (12) par une représentation graphique en au moins un plan déterminé,
— la représentation graphique systématique, dans des plans perpendiculaires au plan de référence (X ∅ Y), des sections du modèle du négatif passant par les zones indémoulables et la détermination des plans de joint décalés dans des tranches successives du modèle du négatif incluant lesdites zones (12) et de largeurs égales à celles desdites zones (12),
— la modélisation des parties mobiles (16) et fixes (15) du moule en fonction des plans de joint précédemment déterminés,
— la fabrication d'un moule dont les parties fixes (15) et mobiles (16) comprennent des plans de joint et des empreintes conformes aux modèles précédemment établis.

2. Procédé selon la revendication 1, caractérisé en ce que la détermination des plans de joint décalées et la modélisation des parties mobiles (16) et fixes (15) du moule comprend les opérations suivantes :
— la visualisation systématique des sections, en deux dimensions, du modèle des empreintes mobiles et fixes réunies dans les zones indémoulables (12),
— la détermination sur lesdites sections des futurs plans de joint décalés par le projeteur mouliste,
— la modélisation d'un boîtier (2) aux cotes standard des modèles des empreintes fixes et mobiles réunies,
— la découpe, pour au moins chacune des zones indémoulables (12), d'une tranche (18) du modèle du boîtier (2) à la largeur de cette zone (12),
— pour chacune de ces tranches de boîtier, l'obtention du modèle de la partie fixe (18') de cette tranche (18), délimitée par les plans de joint précédemment déterminés,
— la fusion des parties fixes desdites tranches, de manière à obtenir un modèle de la partie fixe (15) du boîtier (2) sans empreinte,
— la formation de l'empreinte dans le modèle de la partie fixe (15) du boîtier (2),
— la formation du modèle de la partie mobile (16) du boîtier (2) sans empreinte par enlèvement dans le modèle du boîtier complet (2) de la partie fixe (15) précédemment déterminée,
— la formation de l'empreinte dans le modèle de la partie mobile (16) du boîtier (2).

3. Procédé selon la revendication 2, caractérisé en ce que la formation des empreintes dans les modèles des parties fixes (15) et mobiles (16) respectifs du boîtier (2) est obtenue par un positionnement du modèle de la pièce (1) dans lesdites parties, puis par enlèvement dudit modèle de la pièce (1).

4. Procédé selon l'une des revendications 2 et 3, caractérisé en ce qu'il comprend en outre, après la formation des empreintes dans le modèle des parties fixes (15) et mobiles (16) du boîtier (2), les opérations suivantes :

— la modélisation du volume pièce issu de l'empreinte fixe,

— la modélisation du volume pièce issu de l'empreinte mobile,

— la formation de dépouilles sur lesdits volumes à partir des plans de joint,

— la fusion des deux volumes pièce dépouillés pour permettre l'étude complète avec une pièce aux cotes réelles.

## Claims

1. A process for manufacturing a mold from the shapes of a piece (1) which it is desired to obtain by molding, by computer modelling of the fixed and movable parts of a mold (15, 16) using a computer assisted design software for visualizing the pieces in two and three dimensions, comprising the following steps :

— modelling and graphic representation of the piece (1) in three dimensions,

— determination, from the shapes of the piece and/or of its model, of a zero joint plane which forms the main separation plane of the two parts of the mold,

— modelling and possible graphic representation of the negative of the piece (1), in three dimensions, within a cubic volume which may have the dimensions of the block of material from which the mold is formed, characterized in that said process comprises at least the following complementary steps :

— insertion of the model of the piece (1) in the model of its negative,

— search for the unstrippable zones (12) by simulating a relative movement between the model of the piece (1) and the two parts of the model of its negative defined by the reference plane (X Ø Y), along an axis perpendicular to said plane, and by determining the contact surfaces between the piece (1) and said parts of the model of the negative,

— visualization of the contact surfaces (12) by a graphic representation in at least one given plane,

— the systematic graphic representation, in planes perpendicular to the reference plane (X Ø Y), of the sections of the model of the negative passing through the unstrippable zones and determination of the offset joint planes in successive slices of the model of the negative including said zones (12) and of width equal to those of said zones (12),

— modelling of the mobile (16) and fixed (15) parts of the mold as a function of the established joint planes,

— manufacture of a mold whose fixed (15) and mobile (16) parts comprise joint planes and impressions according to the previously established models.

2. The process as claimed in claim 1, characterized in that the determination of the offset joint planes and modelling of the fixed (15) and mobile (16) parts of the mold comprise the following operations :

— systematic visualization of the sections, in two dimensions, of the model of the mobile and fixed impressions combined in the unstrippable zones (12),

— determination on said sections of the future offset joint planes by the mold pattern designer,

— modelling of a case (2) to the standard dimensions of the models of the combined fixed and mobile impressions,

— cutting out, for at least each of the unstrippable zones (12) of a slice (18) of the model of the case (2) to the width of this zone (12),

— obtaining, for each of these case slices, the model of the fixed part (18') of this slice (18) defined by the previously determined joint planes,

— merging of the fixed parts of said slices so as to obtain a model of the fixed part (15) of the case (2) without impression,

— formation of the impression in the model of the fixed part (15) of the case (2),

— formation of the model of the mobile part (16) of the case (2) without impression by removing from the model of the complete case (2) the previously determined fixed part (15),

— formation of the impression in the model of the mobile part (16) of the case (2).

3. The process as claimed in claim 2, characterized in that the formation of the impressions in the respective models of the fixed (15) and mobile (16) parts of the case (2) is obtained by positioning the model of the piece (1) in said parts, then by removal from said model of the piece (1).

4. The process as claimed in one of claims 2 and 3, characterized in that in further comprises, after formation of the impressions in the model of the fixed (15) and mobile (16) parts of the case (2), the following operations :

— modelling of the piece volume from the fixed impression,

— modelling of the piece volume from the mobile impression,

— formation of the tapers on said volumes from the joint planes,

— merging of the two tapered piece volumes so as to allow the complete study with a piece to the actual dimensions.

## Patentansprüche

1. Verfahren zur Herstellung einer Form, ausgehend von Formen eines Stückes (1), das man durch Abguss zu erhalten wünscht, durch Formgebung des beweglichen und unbeweglichen Teils (15, 16) der Form in einer Datenverarbeitungsanlage, die ein CAD Software benutzt, welches eine zwei- oder dreidimensionale Sichtbarmachung der Stücke ermöglicht, mit folgenden Etappen :

— die dreidimensionale Formgebung und graphische Darstellung des Stücks (1) ;

— die Bestimmung, ausgehend von den Formen des Stücks und/oder seinem Modell, einer Nullteilungsebene, welche die Haupttrennungsebene der beiden Abgussteile bildet,

— die dreidimensionale Formgebung und eventuelle graphische Darstellung des Negativs des Stücks (1), innerhalb des kubischen Volumens, welches die Masse des Materialblocks haben kann, aus dem der Abguss gefertigt wird, dadurch gekennzeichnet, dass es mindestens folgende zusätzliche Etappen beinhaltet :

— die Einfügung des Modells des Stücks (1) in das Modell seines Negativs ;

— die Erfassung der nicht abstreifbaren Zonen (12) durch Simulation einer relativen Verschiebung des Modells des Stücks (1) im Verhältnis zu den beiden Teilen des Modells seines Negativs, die durch die Referenzebene (X, Ø, Y) definiert sind, entlang einer zu besagter Ebene senkrechten Achse und durch die Bestimmung der Kontaktflächen zwischen dem Stück (1) und besagten Teilen des Negativemodells,

— die Sichtbarmachung der Kontaktflächen (12) durch eine graphische Darstellung in mindestens einer bestimmten Ebene,

— die systematische graphische Darstellung in zur Referenzebene (X, Ø, Y) senkrechten Ebenen, der Schnitte des Negativmodells, die durch nichtabstreifbare Zone führen und die Bestimmung der Teilungsebenen in aufeinanderfolgenden Schnitten des Negativmodells, die besagte Zonen (12) einschliessen und deren Breite gleich der der besagten Zonen (12) ist ;

— die Formgebung der beweglichen (16) und unbeweglichen (15) Teile der Form, entsprechend den vorher bestimmten Teilungsebenen ;

— die Herstellung einer Form, deren unbewegliche (15) und bewegliche (16) Teile Teilungsebenen und Prägungen entsprechend den vorher hergestellten Modellen besitzen.

2. Verfahren nach Anspruch 1, dadurch gekennzeichnet, dass die Bestimmung der geschifteten Teilungsebenen und die Formgebung der beweglichen (16) und unbeweglichen (15) Teile der Form folgende Schritte beinhalten :

— die systematische zweidimensionale Sichtbarmachung der Schnitte des Modells der in den nicht abstreifbaren Zonen (12) zusammengefügten beweglichen und unbeweglichen Prägungen ;

— die Bestimmung, auf besagten Schnitten, der zukünftigen geschifteten Teilungsebenen durch den Formmacher ;

— die Formgebung eines Gehäuses (2) mit den Standardabmessungen der zusammengefügten unbeweglichen und beweglichen Prägungsmodelle ;

— die Herstellung, für mindestens jede der nicht abstreifbaren Zonen (12) eines Schnittes (18) des Modells des Gehäuses (2) in der Breite dieser Zone (12) ;

— für jeden der besagten Schnitte des Gehäuses die Herstellung des Modells des unbeweglichen Teils (18') dieses Schnitts (18), begrenzt durch die vorher bestimmten Teilungsebenen ;

— die Zusammenfügung der unbeweglichen Teile besagter Schnitte, um so ein Modell des unbeweglichen Teils (15) des Gehäuses (2) ohne Prägung zu erhalten ;

— die Herstellung der Prägung im Modell des unbeweglichen Teils (15) des Gehäuses (2) ;

— die Herstellung des Modells des beweglichen Teils (16) des Gehäuses (2), ohne Prägung, durch Entfernung, im Modell des kompletten Gehäuses (2), des vorher bestimmten unbeweglichen Teiles (15) ;

— die Herstellung der Prägung im Modell des beweglichen Teils (16) des Gehäuses (2).

3. Verfahren nach Anspruch 2, dadurch gekennzeichnet, dass die Herstellung der Prägungen in den Modellen der unbeweglichen (15) und beweglichen (16) Teile des Gehäuses (2) erreicht wird, indem das Modell des Stücks (1) in besagte Teile eingefügt und dann das Modell des Stücks (1) entfernt wird.

4. Verfahren nach einem der Ansprüche 2 und 3, dadurch gekennzeichnet, dass es ausserdem, nach Herstellung der Prägungen im Modell des unbeweglichen (15) und beweglichen (16) Teil des Gehäuses (2), folgende Schritte beinhaltet :

— die Formgebung des aus der unbeweglichen Prägung erhaltenen Stückvolumens ;

— die Formgebung des aus der beweglichen Prägung erhaltenen Stückvolumens ;

— die Formgebung von Modellschrägen an besagten Volumen, ausgehend von den Teilungsebenen ;

— die Zusammenfügung der beiden mit Schrägen versehenen Stückvolumen, um eine komplette Ausarbeitung zu ermöglichen, bei der ein Stück mit den tatsächlichen Abmessungen zur Verfügung steht.

FIG. 1

9

8

6

7

10

1

5

FIG. 2

Z

X

φ

Y

FIG.3

# FIG. 4a

Ref ∅

Z

Y

# FIG. 4b

Y

X

12

l

FIG. 5

FIG. 6

15

17

16

FIG. 7

FIG.8

FIG. 9

FIG. 10